Europäisches Patentamt

European Patent Office

Office européen des brevets

(19)

(11) EP 1 246 469 A2

(12) **DEMANDE DE BREVET EUROPEEN**

(43) Date de publication:
**02.10.2002 Bulletin 2002/40**

(51) Int Cl.⁷: **H04N 7/26**, H04N 7/30

(21) Numéro de dépôt: **02076088.0**

(22) Date de dépôt: **20.03.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.03.2001 FR 0104112**

(71) Demandeur: **Koninklijke Philips Electronics N.V. 5621 BA Eindhoven (NL)**

(72) Inventeurs:
• **Adelaide, Joseph**
  **75008 Paris (FR)**
• **Didier, Robin**
  **75008 Paris (FR)**
• **Elbaz, Olivier**
  **75008 Paris (FR)**

(74) Mandataire: **Chaffraix, Jean**
  **Société Civile S.P.I.D.**
  **156, Boulevard Haussmann**
  **75008 Paris (FR)**

(54) **Procédé de réduction de format et de décodage similtanés de signaux vidéo codés**

(57)   L'invention concerne un procédé de traitement vidéo de N signaux vidéo codés d'entrée, pour décoder et réduire d'un facteur N le format de chacun desdits signaux codés vidéo d'entrée et générer un ensemble de signaux vidéo décodés de format réduit dans le domaine pixel, chaque signal vidéo codé d'entrée comprenant des blocs DCT. Le procédé selon l'invention est remarquable en ce qu'il comprend une première et une deuxième étape de transformation inverse DCT appliquées chacune simultanément sur plusieurs blocs DCT de taille réduite extraits des N signaux vidéo codés d'entrée. Ainsi sont générés N blocs de sortie de taille réduite définissant un desdits signaux vidéo décodés de format réduit d'un facteur N.

Cette invention peut avantageusement être utilisée pour la composition de signaux vidéo de mosaïque.

Utilisation : Réduction/décodage de signaux vidéo

FIG.2

EP 1 246 469 A2

**Description**

L'invention concerne un procédé de traitement vidéo de N signaux vidéo codés d'entrée, pour décoder et réduire d'un facteur N le format de chacun desdits signaux codés vidéo d'entrée et générer un ensemble de signaux vidéo décodés de format réduit dans le domaine pixel, chaque signal vidéo codé d'entrée comprenant des blocs DCT de taille 8*8 dits « blocs DCT d'entrée ».

Avec l'apparition de la télévision numérique, le nombre de programmes TV qu'un utilisateur peut visualiser sur son poste de télévision a considérablement augmenté. Pour faire face à cet accroissement de programmes TV et permettre à l'utilisateur de choisir parmi cet ensemble de programmes TV, une représentation appelée "mosaïque" a été créée, cette mosaïque consistant en une juxtaposition sur le poste de télévision de l'utilisateur desdits programmes TV préalablement réduits. L'utilisateur peut ainsi voir simultanément le contenu d'un ensemble de programmes TV, ce qui l'aide à sélectionner un programme TV particulier.

Le brevet US publié sous le numéro 5,633,683 décrit un système pour créer, au niveau d'un fournisseur de services vidéo (en anglais "service provider"), un signal vidéo de mosaïque à partir d'un ensemble de signaux vidéo codés selon la norme MPEG-2, lesdits signaux vidéo résultant du codage selon la norme MPEG-2 d'un ensemble de programmes TV par exemple. Pour cela, chaque signal vidéo codé est décodé à l'aide d'un décodeur vidéo. Une opération de réduction du format de chaque signal vidéo codé est également effectuée. Les signaux vidéo décodés de format réduit sont ensuite concaténés dans une mémoire pour générer ledit signal vidéo de mosaïque, ce dernier étant alors encodé selon la norme MPEG-2 avant d'être transmis sur un canal de communication.

Le procédé de création d'un signal vidéo représentant une mosaïque mise en oeuvre dans le document de l'art antérieur présente un certain nombre de limitations.

Tout d'abord, la solution décrite dans l'art antérieur propose d'utiliser une architecture parallèle où chaque signal vidéo codé est séparément décodé par un décodeur approprié. Cela présente l'inconvénient de multiplier les moyens de décodage dans la mesure où il faut prévoir autant de décodeurs que de signaux vidéo codés à décoder, ce qui conduit à un système coûteux.

D'autre part, seules les images de type INTRA, c'est-à-dire les images pour lesquelles aucune compensation de mouvement n'est effectuée, sont décodées. Cela présente le désavantage de générer un signal vidéo de fréquence vidéo réduit désagréable d'un point de vue visuel lorsque la mosaïque est affichée sur un écran.

De plus, lors du décodage des images de type INTRA, seule la composante continue des blocs DCT qui sont contenus dans les signaux vidéo codés subit une opération de transformation inverse DCT (de l'anglais Discret Cosine Transform), ce qui revient à ne pas prendre en considération les autres coefficients DCT de plus haute-fréquence contenus dans lesdits blocs DCT, au détriment de la qualité visuelle puisque les détails visuels des signaux décodés de format réduit sont ainsi supprimés.

L'invention a pour but de remédier dans une large mesure à ces limitations en proposant un procédé de traitement vidéo pour générer de façon économique un ensemble de signaux vidéo décodés de format réduit de meilleure qualité à partir d'un ensemble de signaux vidéo codés selon une technique faisant appel au codage par blocs DCT.

Pour cela, le procédé de traitement vidéo de N signaux vidéo codés d'entrée selon l'invention est remarquable en ce qu'il comprend

- une étape d'extraction de N blocs de taille réduite (8/N * 8/N), chaque bloc de taille réduite étant extrait d'un bloc DCT d'entrée,
- une première étape de transformation inverse DCT appliquée successivement à des vecteurs d'entrée de taille 8, chaque vecteur d'entrée étant rempli à partir des coefficients des lignes (ou des colonnes) constituant les N blocs de taille réduite, chaque étape de transformation inverse DCT générant un vecteur de sortie de taille 8 définissant les lignes (ou les colonnes) de N blocs intermédiaires de taille réduite, ladite première étape de transformation inverse DCT étant répétée sur toutes les lignes (ou les colonnes) des N blocs de taille réduite,
- une deuxième étape de transformation inverse DCT appliquée successivement à des vecteurs d'entrée de taille 8, chaque vecteur d'entrée étant rempli à partir des coefficients des colonnes (ou des lignes) constituant les N blocs intermédiaires, chaque étape de transformation inverse DCT générant un vecteur de sortie de taille 8 définissant, via une étape de calcul récursif appliquée aux valeurs dudit vecteur de sortie, les colonnes (ou les lignes) de N blocs de sortie de taille réduite, ladite deuxième étape de transformation inverse DCT étant répétée sur toutes les colonnes (ou les lignes) des N blocs intermédiaires,

chacun desdits N blocs de sortie de taille réduite définissant un desdits signaux vidéo décodés de format réduit d'un facteur N.

En n'appliquant le procédé que sur un ensemble limité de coefficients DCT pris dans chaque bloc DCT d'entrée, il est possible de décoder et réduire le format de plusieurs signaux vidéo codés en une même opération, ce qui diminue le coût de l'implémentation matérielle d'un tel procédé, contrairement à la solution de l'art antérieur.

Selon une caractéristique supplémentaire, le procédé selon l'invention est remarquable en ce que l'étape d'extraction effectue l'extraction des coefficients DCT de plus basse fréquence dans chaque bloc DCT d'entrée.

Cela permet d'obtenir une meilleure qualité des signaux vidéo de format réduit puisque les détails visuels définis par les coefficients de fréquence non nulle sont partiellement conservés.

Selon une caractéristique supplémentaire, le procédé selon l'invention est remarquable en ce que la première étape et la deuxième étape de transformation inverse DCT mettent en oeuvre une matrice de transformation de taille 8*8 dont la valeur des coefficients est fonction de la valeur du paramètre N.

La réduction de format faite sur les signaux vidéo codés d'entrée peut être ainsi faite par simple changement des coefficients de la matrice de transformation. Cela permet une grande souplesse dans l'implémentation de ce procédé puisqu'un calcul matriciel utilisant une matrice de même taille 8*8 est mis en oeuvre.

L'invention concerne également un procédé de traitement vidéo pour décoder et réduire d'un facteur N le format d'un signal vidéo codé d'entrée et générer un signal vidéo décodé de format réduit dans le domaine pixel, ledit signal vidéo codé d'entrée comprenant des blocs DCT de taille 8*8 dits « blocs DCT d'entrée ». Ce procédé est remarquable en ce qu'il comprend :

- une étape d'extraction de N blocs de taille réduite (8/N * 8/N), chaque bloc de taille réduite étant extrait d'un bloc DCT d'entrée,
- une première étape de transformation inverse DCT appliquée successivement à des vecteurs d'entrée de taille 8, chaque vecteur d'entrée étant rempli à partir des coefficients des lignes (ou des colonnes) constituant les N blocs de taille réduite, chaque étape de transformation inverse DCT générant un vecteur de sortie de taille 8 définissant les lignes (ou les colonnes) de N blocs intermédiaires de taille réduite, ladite première étape de transformation inverse DCT étant répétée sur toutes les lignes (ou les colonnes) des N blocs de taille réduite,
- une deuxième étape de transformation inverse DCT appliquée successivement à des vecteurs d'entrée de taille 8, chaque vecteur d'entrée étant rempli à partir des coefficients des colonnes (ou des lignes) constituant les N blocs intermédiaires, chaque étape de transformation inverse DCT générant un vecteur de sortie de taille 8 définissant, via une étape de calcul récursif appliquée aux valeurs dudit vecteur de sortie, les colonnes (ou les lignes) de N blocs de sortie de taille réduite, ladite deuxième étape de transformation inverse DCT étant répétée sur toutes les colonnes (ou les lignes) des N blocs intermédiaires,

lesdits blocs de sortie de taille réduite définissant ledit signal vidéo décodé de format réduit d'un facteur N.

Ce procédé présente l'avantage de réduire le format d'un unique signal vidéo codé en minimisant les étapes de traitement puisque plusieurs blocs DCT d'entrée sont traités simultanément.

L'invention concerne également un procédé de création d'une mosaïque de programmes à partir d'un ensemble de $2^N$ signaux vidéo codés d'entrée comprenant des blocs DCT de taille 8*8 dits « blocs DCT d'entrée », ladite mosaïque consistant en une juxtaposition de programmes vidéo décodés de format réduit d'un facteur N obtenus à partir desdits signaux vidéo codés d'entrée. Ce procédé est remarquable en ce qu'il comprend, pour chaque sous-ensemble de $(2^N/N)$ signaux vidéo codés d'entrée :

- une étape d'extraction de N blocs de taille réduite 8/N * 8/N, chaque bloc de taille réduite étant extrait d'un bloc DCT d'entrée appartenant au sous-ensemble considéré,
- une première étape de transformation inverse DCT appliquée successivement à des vecteurs d'entrée de taille 8, chaque vecteur d'entrée étant rempli à partir des coefficients des lignes (ou des colonnes) constituant les N blocs de taille réduite, chaque étape de transformation inverse DCT générant un vecteur de sortie de taille 8 définissant les lignes (ou les colonnes) de N blocs intermédiaires de taille réduite, ladite première étape de transformation inverse DCT étant répétée sur toutes les lignes (ou les colonnes) des N blocs de taille réduite,
- une deuxième étape de transformation inverse DCT appliquée successivement à des vecteurs d'entrée de taille 8, chaque vecteur d'entrée étant rempli à partir des coefficients des colonnes (ou des lignes) constituant les N blocs intermédiaires, chaque étape de transformation inverse DCT générant un vecteur de sortie de taille 8 définissant, via une étape de calcul récursif appliquée aux valeurs dudit vecteur de sortie, les colonnes (ou les lignes) de N blocs de sortie de taille réduite, ladite deuxième étape de transformation inverse DCT étant répétée sur toutes les colonnes (ou les lignes) des N blocs intermédiaires,

dans chaque sous-ensemble, chacun desdits N blocs de sortie de taille réduite définissant un desdits signaux vidéo décodés de format réduit d'un facteur N.

L'invention concerne également un système de traitement vidéo de N signaux vidéo codés d'entrée. Ce système de traitement vidéo est remarquable en ce qu'il met en oeuvre l'un ou l'autre des procédés présentés ci-dessus.

L'invention concerne également un système de création d'une mosaïque de programmes à partir d'un ensemble de $2^N$ signaux vidéo codés d'entrée. Ce système de création est remarquable en ce qu'il met en oeuvre le procédé de création d'une mosaïque de programmes présenté ci-dessus.

L'invention concerne également un programme d'ordinateur comprenant des instructions de code de programme pour exécuter les différentes étapes de l'un ou l'autre des procédés de traitement vidéo présentés ci-dessus, lorsque ledit programme est exécuté sur un processeur de signal dans un système de traitement vidéo.

L'invention concerne également un programme d'ordinateur comprenant des instructions de code de programme pour exécuter les différentes étapes du procédé de création d'une mosaïque présenté ci-dessus, lorsque ledit programme est exécuté sur un processeur de signal dans un système de création d'une mosaïque de programmes.

Ces aspects de l'invention ainsi que d'autres aspects plus détaillés apparaîtront plus clairement grâce à la description suivante, faite en regard des dessins ci-annexés, le tout donné à titre d'exemple non limitatif, dans lesquels :

La figure 1 illustre le procédé de traitement selon l'invention pour réduire d'un facteur 2 deux signaux vidéo codés,
La figure 2 décrit un système de composition d'un signal de mosaïque utilisant le procédé selon l'invention.

Les explications suivantes sont données en considérant que les signaux vidéo traités par le procédé selon l'invention sont codés selon la norme MPEG-2 ISO/IEC 13818-2, mais il est évident pour l'homme du métier que l'invention peut également être mise en oeuvre de la même manière lorsque ces signaux vidéo sont codés selon d'autres normes vidéo faisant appel au codage par blocs DCT, telles que les normes H.263, MPEG-1 ou MPEG-4.

La norme MPEG-2 ISO/IEC 13818-2 est basée sur l'utilisation de la transformation DCT appliquée à des blocs de pixels de taille 8*8. Via une opération de quantification, la transformation DCT permet de dé-corréler les informations contenues dans chaque bloc de pixels afin de ne retenir que les coefficients DCT de plus forte valeur (chaque bloc de pixels étant de type INTRA, c'est-à-dire ne résultant pas d'une différence avec un autre bloc de pixels, ou INTER, c'est-àdire résultant d'une différence avec un autre bloc de pixels). Cette transformation DCT résulte dans la génération de blocs DCT de taille 8*8 comportant 8*8 coefficients DCT.

Inversement, lorsqu'un signal vidéo est codé selon la norme MPEG-2, le décodage de chaque bloc DCT de taille 8*8 est effectué en utilisant une transformation inverse DCT afin de générer un bloc de pixels de taille 8*8. Cette transformation inverse est régie par l'équation suivante :

$$x(n,m) = \frac{1}{4} \sum_{i=0}^{7} \sum_{j=0}^{7} C(n)C(m)f(n,m)\cos\left(\frac{(2n+1)i\pi}{16}\right)\cos\left(\frac{(2m+1)j\pi}{16}\right)$$

$$avec \quad C(n), C(m) = \begin{cases} \frac{1}{\sqrt{2}} & if\ n=0, m=0 \\ 1 & if\ n\neq 0\ or\ m\neq 0 \end{cases}$$

**Eq.1**

n : indice de ligne dans un bloc,
m : indice de colonne dans un bloc,
x(n,m) : valeur du pixel situé à l'intersection de la ligne d'indice n et de la colonne d'indice m,
f(n,m) : valeur du coefficient DCT situé à l'intersection de la ligne d'indice n et de la colonne d'indice m.

Cette transformation inverse DCT utilise un double indiçage de i et j qui présente l'inconvénient de disposer de moyens de calcul importants. Pour palier cela, il est possible d'utiliser la propriété de Eq.1 permettant de séparer en deux calculs successifs distincts la transformation inverse DCT. Ainsi, plutôt que chaque pixel résulte directement d'une combinaison linéaire de 8*8=64 valeurs f(n,m) comme c'est le cas si Eq.1 est utilisée directement, chaque pixel résulte de deux combinaisons linéaires successives de 8 valeurs f(n,m). En d'autres termes, une transformation inverse DCT telle que régie par Eq.1 peut être obtenue par une première transformation inverse DCT sur les lignes d'un bloc DCT, suivie d'une seconde transformation inverse DCT sur les colonnes du bloc obtenu après la première transformation inverse DCT. Chaque transformation inverse DCT est régie par l'équation suivante :

$$x(n) = \sum_{i=0}^{7} \cos\left(\frac{(2n+1)i\pi}{16}\right) C(n)y(n)$$

$$avec \quad C(n) = \begin{cases} \frac{1}{2\sqrt{2}} & if\ n=0 \\ \frac{1}{2} & if\ n\neq 0 \end{cases}$$

**Eq.2**

n : indice entier tel que $0 \leq n \leq 7$,

x(n) : valeur du pixel d'indice n,

y(n) : valeur du coefficient DCT d'indice n dans une ligne ou une colonne du bloc DCT.

Le calcul de Eq.2 revient à effectuer la multiplication d'une matrice de taille 8*8 à un vecteur composé de 8 coefficients DCT correspondant à une ligne ou à une colonne d'un bloc DCT à décoder, ladite multiplication résultant en un vecteur composé de 8 valeurs dans le domaine pixel. Cependant, il est possible de faire intervenir une matrice $M_{8\times8}$ simplifiant les calculs. Par un jeux d'écritures à partir de Eq.2, la transformation inverse DCT est alors régie par les équations suivantes mettant en oeuvre une pré-multiplication des coefficients DCT y(n) (cf. Eq.3), un calcul matriciel avec la matrice $M_{8\times8}$ (cf. Eq.4), et un calcul récursif permettant de déterminer les coefficients de sortie x(n) (cf. Eq.5) :

$$\begin{cases} X(n) = \dfrac{1}{2\sqrt{2}} y(n) & \text{pour } n = 0,4 \\[3mm] X(n) = \dfrac{1}{2\sqrt{2}} \cos\left(n\dfrac{\pi}{16}\right) y(n) & \text{pour } n = 1,2,3,5,6,7 \end{cases}$$

Eq.3

$$\begin{pmatrix} x'(0) \\ x'(1) \\ x'(2) \\ x'(3) \\ x'(4) \\ x'(5) \\ x'(6) \\ x'(7) \end{pmatrix} = M_{8\times8} \cdot \begin{pmatrix} X(0) \\ X(4) \\ X(1)+X(7) \\ X(2)+X(6) \\ X(3)+X(5) \\ X(1)-X(7) \\ X(2)-X(6) \\ X(3)-X(5) \end{pmatrix}$$

Eq.4

$$\text{avec } M_{8\times8} = \begin{pmatrix} 1 & 1 & A & A & A & 0 & 0 & 0 \\ 1 & 0 & 0 & 0 & 0 & B & 1 & C \\ 1 & -1 & 1 & 0 & -1 & 0 & 0 & 0 \\ 1 & 0 & 0 & 0 & 0 & C & -1 & -B \\ 1 & 1 & 0 & -A & 0 & 0 & 0 & 0 \\ 1 & 0 & 0 & 0 & 0 & -C & -1 & B \\ 1 & -1 & -1 & 0 & 1 & 0 & 0 & 0 \\ 1 & 0 & 0 & 0 & 0 & -B & 1 & -C \end{pmatrix}$$

$$\begin{cases} x(0) = x'(0) \\ x(n) = 2x'(n) - x(n-1) & \text{pour } n = 1...7 \end{cases}$$

Eq.5

avec

$$\begin{cases} A = \sqrt{2} \\ B = \sqrt{2}\cos\left(\dfrac{\pi}{8}\right) \\ C = \sqrt{2}\cos\left(\dfrac{3\pi}{8}\right) \end{cases}$$

Le procédé selon l'invention permet en une même opération un décodage simultané de plusieurs blocs DCT d'entrée. Il repose sur un traitement partiel des coefficients contenus dans chaque bloc DCT, ledit décodage consistant à la fois en une réduction de la taille des blocs et en une transformation inverse DCT des coefficients.

La réduction du format des blocs DCT d'entrée est faite par extraction d'un ensemble limité de coefficients DCT dans les lignes et les colonnes de chaque bloc DCT, la transformation inverse DCT étant alors appliquée sur ce dit ensemble limité de coefficients DCT. En effet, il est possible d'obtenir une bonne qualité d'image de format réduit en ne décodant seulement qu'un ensemble limité de coefficients DCT, cet ensemble limité correspondant aux coefficients de plus basse fréquence contenus dans les blocs DCT de taille 8*8. Ces coefficients sont habituellement situés dans le carré supérieur gauche de chaque bloc DCT, dans la mesure ou les coefficients sont classés par fréquence croissante, la composante continue étant située dans le coin supérieur gauche.

Une réduction de format de 2 ou de 4 sur les blocs DCT peut être envisagée. Dans le cas d'une réduction de format d'un facteur 2, un bloc DCT de taille 8*8 sera décodé pour résulter en un bloc de pixels de taille 4*4. Dans le cas d'une réduction de format d'un facteur 4, un bloc DCT de taille 8*8 sera décodé pour résulter en un bloc de pixels de taille 2*2. A cet effet, le procédé selon l'invention prévoit de mettre en oeuvre une transformation inverse DCT successivement sur les lignes et les colonnes d'un bloc DCT contenant ledit ensemble limité de coefficients DCT.

Dans le cas où une réduction de format d'un facteur 2 est envisagée, la transformation appliquée à un ensemble de 4 coefficients DCT, est régie par l'équation suivante :

$$x(n) = \sum_{i=0}^{3} \cos\left(\frac{(2n+1)i\pi}{8}\right)C(n)y(n)$$

$$avec \quad C(n) = \begin{cases} \dfrac{1}{2} & if\ n=0 \\ \dfrac{1}{\sqrt{2}} & if\ n\neq0 \end{cases}$$

**Eq.6**

n : indice entier tel que $0 \leq n \leq 3$,
x(n) : valeur du pixel d'indice n,
y(n) : valeur du coefficient DCT d'indice n dans une ligne ou une colonne du bloc DCT.

Le calcul de Eq.6 revient à effectuer la multiplication d'une matrice de taille 4*4 à un vecteur composé de 4 coefficients DCT correspondant à une ligne ou à une colonne d'un bloc DCT de taille 4*4 extrait d'un bloc DCT de taille 8*8 à décoder, ladite multiplication résultant en un vecteur composé de 4 valeurs dans le domaine pixel. Cependant, il est possible de faire intervenir une matrice $M_{4\times4}$ dans le but de simplifier les calculs. Par un jeux d'écritures à partir de Eq.6, la transformation inverse DCT est alors régie par les équations suivantes mettant en oeuvre une pré-multiplication selon Eq.7 des coefficients DCT y(n), un calcul matriciel selon Eq.8 avec la matrice $M_{4\times4}$, et un calcul récursif selon Eq.9 permettant de déterminer les coefficients de sortie, c'est-à-dire la valeur des pixels x(k) :

$$\begin{cases} X(n) = \dfrac{1}{2}y(n) & \text{pour n} = 0, 2 \\ X(n) = \dfrac{1}{2}\cos\left(n\dfrac{\pi}{8}\right)y(n) & \text{pour n} = 1, 3 \end{cases}$$

**Eq.7**

$$\begin{pmatrix} x'(0) \\ x'(1) \\ x'(2) \\ x'(3) \end{pmatrix} = \mathrm{M}_{4\times4} \cdot \begin{pmatrix} X(0) \\ X(2) \\ X(1) + X(3) \\ X(1) - X(3) \end{pmatrix} \qquad \text{Eq.8}$$

avec

$$\mathrm{M}_{4\times4} = \begin{pmatrix} 1 & 1 & A & 0 \\ 1 & 0 & 0 & 1 \\ 1 & -1 & 0 & 0 \\ 1 & 0 & 0 & -1 \end{pmatrix}$$

$$\begin{cases} x(0) = x'(0) \\ x(k) = 2x'(k) - x(k-1) \qquad k = 1...3 \end{cases} \qquad \text{Eq.9}$$

avec $A = \sqrt{2}$

Eq.4 démontre qu'une transformation inverse DCT effectuée successivement sur les lignes et les colonnes d'un bloc DCT de taille 8*8 implique l'utilisation d'une matrice de transformation de taille 8*8. Le procédé selon l'invention tire bénéfice du fait qu'une transformation inverse DCT d'un bloc DCT de taille réduite utilise une matrice de transformation de taille réduite (telle que $N_{2\times2}$ ou $N_{4\times4}$), si bien qu'il est possible de définir une matrice de transformation inverse DCT de taille 8*8, c'est-à-dire une matrice de taille standard utilisée pour effectuer une transformation inverse DCT d'un bloc DCT de taille 8*8, contenant plusieurs matrices de transformation de taille réduite pour décoder simultanément plusieurs blocs DCT par un seul calcul matriciel appliqué successivement sur un ensemble limité de coefficients DCT extraits des lignes et des colonnes desdits blocs DCT.

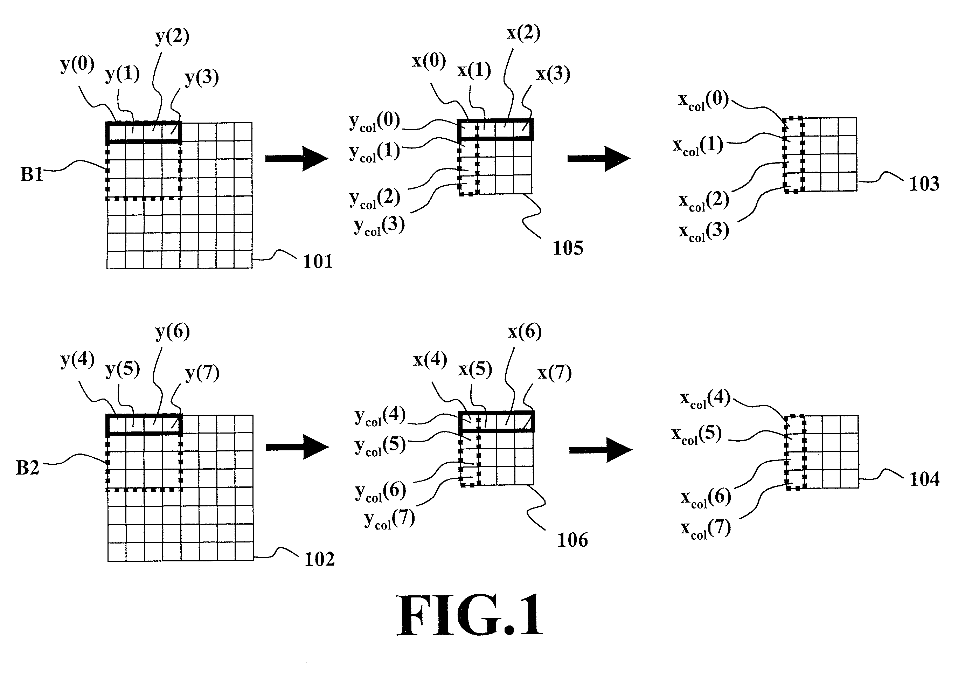

La figure 1 représente le cas où deux signaux vidéo décodés de format réduit sont obtenus à partir de deux signaux vidéo codés selon la norme MPEG-2. Deux blocs DCT 101 et 102 de taille 8*8 appartenant chacun à un signal vidéo codé subissent un traitement simultané successivement sur leurs lignes puis leurs colonnes conduisant à une réduction de leur format ainsi qu'à une transformation inverse DCT. Le décodage du bloc DCT 101 permet d'obtenir le bloc de pixels 103, tandis que le bloc DCT 102 permet d'obtenir le bloc de pixels 104. Ce traitement de décodage est appliqué à tous les blocs DCT des signaux vidéo codés.

Ce procédé comprend une étape de calcul matriciel mettant en oeuvre une matrice de transformation $M_{2\times4\times4}$ de taille 8*8 dont les coefficients dérivent de la matrice $N_{4\times4}$. La matrice $N_{2\times4\times4}$ est définie par:

$$\mathrm{M}_{2\times4\times4} = \begin{pmatrix} \mathrm{M}_{4\times4} & 0 \\ 0 & \mathrm{M}_{4\times4} \end{pmatrix} = \begin{pmatrix} 1 & 1 & A & 0 & 0 & 0 & 0 & 0 \\ 1 & 0 & 0 & 1 & 0 & 0 & 0 & 0 \\ 1 & -1 & 0 & 0 & 0 & 0 & 0 & 0 \\ 1 & 0 & 0 & -1 & 0 & 0 & 0 & 0 \\ 0 & 0 & 0 & 0 & 1 & 1 & A & 0 \\ 0 & 0 & 0 & 0 & 1 & 0 & 0 & 1 \\ 0 & 0 & 0 & 0 & 1 & -1 & 0 & 0 \\ 0 & 0 & 0 & 0 & 1 & 0 & 0 & -1 \end{pmatrix}$$

De cette façon, il est possible d'effectuer une double opération de décodage sur les blocs DCT 101 et 102 de façon simultanée au moyen d'un seul calcul matriciel régi par les équations suivantes :

$$\begin{cases} X(n) = \dfrac{1}{2} y(n) & \text{pour } n = 0, 2, 4, 6 \\[2mm] X(n) = \dfrac{1}{2} \cos\left(n\dfrac{\pi}{8}\right) y(n) & \text{pour } n = 1, 3, 5, 7 \end{cases}$$

**Eq.10**

$$\begin{pmatrix} x'(0) \\ x'(1) \\ x'(2) \\ x'(3) \\ x'(4) \\ x'(5) \\ x'(6) \\ x'(7) \end{pmatrix} = M_{2\times4\times4} . V_{2\times4\times4}$$

**Eq.11**

avec

$$V_{2\times4\times4} = \begin{pmatrix} X(0) \\ X(4) \\ X(1) + X(7) \\ X(2) + X(6) \\ X(3) + X(5) \\ X(1) - X(7) \\ X(2) - X(6) \\ X(3) - X(5) \end{pmatrix}$$

$$\begin{cases} x(0) = x'(0) \\ x(k) = 2x'(k) - x(k-1) & k = 1...3 \\ x(4) = x'(4) \\ x(k) = 2x'(k) - x(k-1) & k = 5...7 \end{cases}$$

**Eq.12**

Ce système d'équations est appliqué dans un premier temps sur les lignes des blocs de taille 4*4 référencés B1 et B2, B1 et B2 étant extraits des blocs DCT de taille 8*8 référencés 101 et 102. Les blocs B1 et B2 comprennent de façon avantageuse les coefficients DCT de plus basse fréquence des blocs DCT référencés 101 et 102.

Dans ce calcul, les coefficients y(n) sont extraits des blocs B1 et B2 afin de définir les 8 valeurs X(n), les valeurs X(n) permettant de calculer les composantes du vecteur colonne $V_{2\times4\times4}$ de taille 8 auquel la matrice de transformation $M_{2\times4\times4}$ s'applique.

Après calcul matriciel selon l'équation 11 pour obtenir le vecteur colonne se composant des 8 valeurs x'(n), la résolution du calcul récursif selon l'équation 12 permet d'obtenir un vecteur de sortie de taille 8 comprenant les valeurs x(n), les 4 premières valeurs [x(0),x(1),x(2),x(3)] et les 4 dernières valeurs [x(4),x(5),x(6),x(7)] correspondant respectivement à la première ligne des blocs 105 et 106, dits « blocs intermédiaires ».

Le même traitement effectué sur la ligne de coefficients [y(0),y(1),y(2),y(3)] est répété pour les 3 autres lignes des blocs B1 et B2 d'où sont extraits chaque fois les 4 premiers coefficients y(n). De cette façon, les deux blocs intermédiaires de taille 4*4 référencés 105 et 106 sont entièrement définis.

Dans un second temps, pour obtenir les blocs de sortie 103 et 104, le système d'équations 10, 11 et 12 est appliqué pour des valeurs y(n)=y$_{col}$(n) prises dans les quatre colonnes des blocs intermédiaires 105 et 106 comme illustré à la figure 1. Cela revient à effectuer une nouvelle fois le traitement effectué sur les quatre lignes des blocs B1 et B2, mais appliqué cette fois-ci aux blocs de taille 4*4 obtenus après transposition des blocs 105 et 106.

Bien sûr, pour le traitement effectué sur les blocs DCT référencés B1 et B2, il est possible d'effectuer un traitement selon les équations 10-11-12 d'abord sur les colonnes des blocs B1 et B2, puis sur les lignes des blocs intermédiaires 105 et 106, dans le but de définir les blocs de sortie de taille 4*4 référencés 103 et 104.

De la même façon que dans Eq.4 et Eq.8, dans le cas où une réduction de format d'un facteur 4 est envisagée, il est possible de définir une matrice $M_{2\times2}$ de transformation de taille 2*2 permettant d'effectuer une transformation inverse DCT à un ensemble de 2 coefficients DCT d'une ligne ou d'une colonne d'un bloc DCT de taille 2*2, ce dernier étant extrait d'un bloc DCT de taille 8*8. Dans ce cas, il est possible de décoder selon l'invention 4 blocs DCT de taille 8*8, chaque bloc DCT étant transformé en un bloc de pixels de taille 2*2. Pour cela, une approche identique à celle relative aux équations 10, 11 et 12 est conduite par calcul matriciel suivant les équations 13, 14 et 15 au moyen d'une matrice $N_{4\times4\times4}$ de taille 8*8 définie par :

$$M_{4\times4\times4} = \begin{pmatrix} M_{2\times2} & 0 & 0 & 0 \\ 0 & M_{2\times2} & 0 & 0 \\ 0 & 0 & M_{2\times2} & 0 \\ 0 & 0 & 0 & M_{2\times2} \end{pmatrix} = \begin{pmatrix} 1 & 1 & 0 & 0 & 0 & 0 & 0 & 0 \\ 1 & 0 & 0 & 0 & 0 & 0 & 0 & 0 \\ 0 & 0 & 1 & 1 & 0 & 0 & 0 & 0 \\ 0 & 0 & 1 & 0 & 0 & 0 & 0 & 0 \\ 0 & 0 & 0 & 0 & 1 & 1 & 0 & 0 \\ 0 & 0 & 0 & 0 & 1 & 0 & 0 & 0 \\ 0 & 0 & 0 & 0 & 0 & 0 & 1 & 1 \\ 0 & 0 & 0 & 0 & 0 & 0 & 1 & 0 \end{pmatrix}$$

avec

$$M_{2\times2} = \begin{pmatrix} 1 & 1 \\ 1 & 0 \end{pmatrix}$$

$$\left\{ X(n) = \frac{1}{\sqrt{2}} y(n) \right. \qquad \text{pour n} = 0...7 \qquad \textbf{Eq.13}$$

$$\begin{pmatrix} x'(0) \\ x'(1) \\ x'(2) \\ x'(3) \\ x'(4) \\ x'(5) \\ x'(6) \\ x'(7) \end{pmatrix} = M_{4\times4\times4} \cdot V_{4\times4\times4} = M_{4\times4\times4} \cdot \begin{pmatrix} X(0) \\ X(1) \\ X(2) \\ X(3) \\ X(4) \\ X(5) \\ X(6) \\ X(7) \end{pmatrix} \qquad \textbf{Eq.14}$$

$$\begin{cases} x(0) = x'(0) \\ x(k) = 2x'(k) - x(k-1) & k = 1 \\ x(2) = x'(2) \\ x(k) = 2x'(k) - x(k-1) & k = 3 \\ x(4) = x'(4) \\ x(k) = 2x'(k) - x(k-1) & k = 5 \\ x(6) = x'(6) \\ x(k) = 2x'(k) - x(k-1) & k = 7 \end{cases} \qquad \textbf{Eq.15}$$

Un aspect remarquable de cette invention est de pouvoir effectuer au moyen d'un calcul matriciel mettant en oeuvre une matrice de même taille 8*8, différents types de décodage sur des blocs DCT de taille 8*8 :

- un premier calcul matriciel utilisant la matrice $M_{8\times8}$ suivi d'un calcul récursif permet de décoder tous les coefficients d'un bloc DCT d'entrée de taille 8*8 d'un unique signal vidéo codé, pour résulter dans un bloc de pixels de taille 8*8,
- un second calcul matriciel utilisant la matrice $M_{2\times4\times4}$ de taille 8*8 permet de décoder, en une même opération matricielle suivie d'un calcul récursif, deux blocs DCT d'entrée de taille 8*8 issus de deux signaux vidéo codés, pour résulter dans deux blocs de pixels de taille 4*4,
- un troisième calcul matriciel utilisant la matrice $M_{4\times4\times4}$ de taille 8*8 permet de décoder, en une même opération matricielle suivie d'un calcul récursif, quatre blocs DCT d'entrée de taille 8*8 issus de quatre signaux vidéo codés, pour résulter dans quatre blocs de pixels de taille 2*2.

Ce procédé de décodage permet ainsi de passer d'un facteur de réduction à un autre, par un simple changement des coefficients d'une matrice de calcul de taille 8*8, suivant le nombre de signaux vidéo à décoder simultanément.

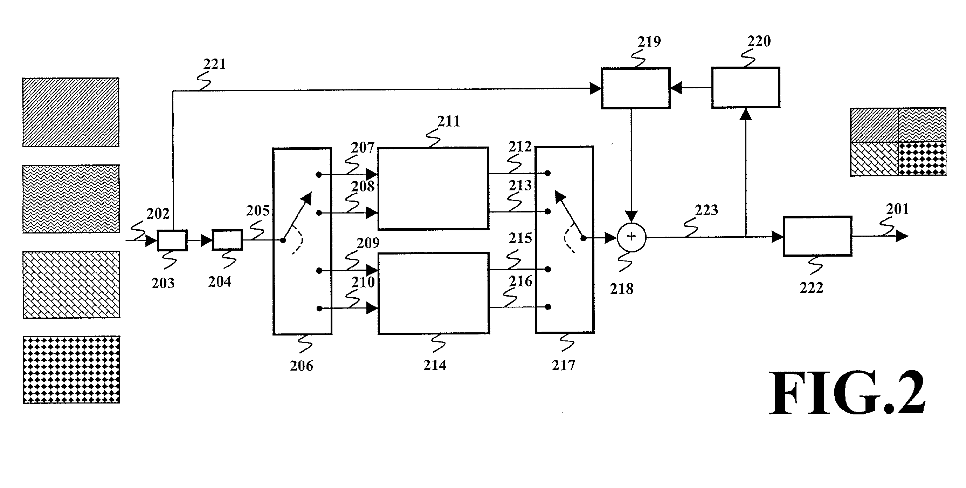

La figure 2 décrit un système de création d'un signal de mosaïque implémentant le procédé de décodage selon l'invention. Ce système illustre les moyens de création par un fournisseur de services, d'un signal de mosaïque vidéo 201 à partir d'un ensemble de signaux vidéo multiplexés 202.

Ce système permet de générer un signal de mosaïque 201 après traitement de quatre signaux vidéo d'entrée 202 multiplexés. Ces signaux vidéo correspondent à des signaux vidéo par exemple comprimés selon la norme MPEG-2 et multiplexés dans un flux transport MPEG-2.

Chaque signal vidéo d'entrée subit une réduction de format d'un facteur 2 horizontalement et verticalement, les signaux étant traités deux par deux par le procédé selon l'invention via le calcul matriciel mettant en oeuvre la matrice $M_{2\times4\times4}$.

Dans un premier temps, les coefficients DCT contenus dans les signaux 202 subissent un décodage entropique par des moyens 203 (par exemple une table de correspondance mettant en correspondance chaque coefficient du signal avec un nouveau coefficient de sortie), puis une opération de quantification inverse par les moyens 204 (par exemple des moyens de calcul effectuant une multiplication des coefficients d'entrée par un coefficient), lesdits moyens 204 délivrant un signal 205 contenant des coefficients DCT caractérisant chaque signal vidéo d'entrée comprimé. Afin de réduire la complexité de l'implémentation, les opérations 203 et 204 peuvent être temporellement multiplexées de sorte que ces opérations soient successivement appliquées sur les coefficients DCT contenus dans chacun des quatre signaux vidéo d'entrée.

Un démultiplexeur 206 permet une séparation des coefficients DCT dans le signal 205 pour grouper les coefficients DCT relatifs à des blocs DCT de référence 207 de taille 8*8 définissant un premier signal vidéo codé, les coefficients DCT relatifs à des blocs DCT de référence 208 de taille 8*8 définissant un second signal vidéo codé, les coefficients DCT relatifs à des blocs DCT de référence 209 de taille 8*8 définissant un troisième signal vidéo codé, et les coefficients DCT relatifs à des blocs DCT de référence 210 de taille 8*8 définissant un quatrième signal vidéo codé.

Les blocs DCT de référence 207 et 208 de taille 8*8 sont alors décodés simultanément avec les moyens 211 selon les différentes étapes du procédé décrit à la figure 1, afin de délivrer respectivement les blocs de pixels 212 et 213 de taille 4*4. Les moyens 211 comprennent notamment des moyens de calcul matriciel hardware (par exemple de type processeur de signal) et/ou software (jeu d'instructions, codes de programmes issus de la compilation d'un programme d'ordinateur), lesdits moyens de calcul étant séquencés temporellement par une dimension contenant 8 coefficients extraits des lignes des blocs 207 et 208, et une mémoire machine d'états, pour effectuer une série d'opérations d'inverse DCT sur des vecteurs à une mémoire tampon pour stocker le résultat de ces transformations inverse DCT. Lesdits moyens de calcul matriciel effectuent ensuite une deuxième série d'opérations d'inverse DCT, suivant les colonnes, sur les coefficients stockés dans ladite mémoire tampon. Les moyens 211 permettent en une même multiplication matricielle faite entre une matrice de taille 8*8 (ici la matrice $M_{2\times4\times4}$), et un vecteur de dimension 8, de décoder les blocs DCT 207 et 208 de sorte qu'une transformation inverse DCT est effectuée en même temps qu'une réduction de format d'un facteur 2.

De façon similaire aux blocs DCT 207 et 208, les blocs DCT 209 et 210 sont décodés selon le procédé décrit à la figure 1 par les moyens 214 (identiques aux moyens 211), résultant respectivement dans les blocs de pixels 215 et 216 de taille 4*4.

Les signaux vidéo d'entrée étant encodés selon la norme MPEG-2, les blocs DCT 207, 208, 209 et 210 peuvent donc être soit de type INTRA pour lequel aucune compensation de mouvement n'est nécessaire, soit de type INTER pour lequel une compensation de mouvement doit être faite afin de s'affranchir des dérives de qualité d'image au cours du temps.

Dans le but de réduire la complexité de l'implémentation, une seule boucle de compensation de mouvement formée des éléments 218, 219 et 220 est mise en place. Le multiplexeur 217 permet de traiter successivement dans le temps les différents blocs de pixels de taille 4*4 référencés 212, 213, 215 et 216.

Lorsqu'un bloc de pixels de taille 4*4 est de type INTRA, aucune compensation de mouvement n'est faite si bien que le bloc de pixels porté par le signal 223 est identique au bloc 212.

Lorsqu'un bloc de pixels de taille 4*4 est de type INTER, une addition au moyen de l'additionneur 218 est faite entre les pixels de ce bloc et ceux d'un bloc de référence de même dimension précédemment stocké dans la mémoire 220 et compensé en mouvement au moyen du compensateur de mouvement 219, ledit compensateur utilisant les vecteurs de mouvement 221 remis à l'échelle et associé audit bloc de type INTER (ici par réduction d'un facteur 2 de chaque composante horizontale et verticale).

Ainsi, que le bloc de pixels de taille 4*4 délivré par le multiplexeur 217 soit de type INTRA ou INTER, un bloc décodé de pixels de taille 4*4 est obtenu sur le signal 223.

Dans un dernier temps, un compositeur vidéo 222 assemble dans un même plan d'image les différents blocs portés par le signal 223. De cette façon, de par la réduction de format d'un facteur 2 (horizontalement et verticalement) effectuée sur les signaux vidéo d'entrée, 4 signaux vidéo de format réduit sont assemblés dans un même plan d'image, résultant dans le signal vidéo de mosaïque 201 destiné par exemple à être affiché sur un poste de télévision.

La mise en oeuvre du procédé selon l'invention dans le système illustré à la figure 2 est remarquable en ce qu'un simple changement des coefficients dans la matrice 8*8 utilisée pour effectuer les transformations inverse DCT permet de passer, sans changer l'architecture matérielle des moyens 211 et 214, de la création d'un signal de mosaïque 201 comprenant quatre signaux vidéo de taille réduite d'un facteur 2, au décodage d'un unique signal vidéo d'entrée sans réduction de format. Cette caractéristique est particulièrement utile lorsqu'un utilisateur sélectionne un signal de format réduit dans le signal de mosaïque dans le but que ce signal sélectionné soit visualisé en plein écran. En effet, dans le cas où un signal de mosaïque 201 est généré, la matrice $M_{2\times4\times4}$ est utilisée pour le calcul matriciel relatif aux transformations inverse DCT faites par 211 et 214. Il suffit donc de remplacer la matrice de taille 8*8 référencée $M_{2\times4\times4}$ par la matrice de taille 8*8 référencée $M_{8\times8}$ puis d'appliquer cette dernière aux blocs DCT d'un seul signal d'entrée sélectionné parmi 207-208-209-201, résultant en la génération du signal vidéo sélectionné sans réduction de format.

L'invention prévoit aussi un second système (non représenté), du type de celui proposé à la figure 2, pour effectuer la création d'un signal de mosaïque à partir de 16 signaux vidéo d'entrée. Dans ce cas, 4 blocs DCT de taille 2*2 appartenant chacun à un signal vidéo codé d'entrée sont décodés simultanément au moyen d'une même opération matricielle utilisant la matrice $M_{4\times4\times4}$. Chaque bloc DCT de taille 8*8 est ainsi transformé en un bloc de pixels de taille 2*2, ce qui permet après composition, de créer un signal de mosaïque contenant 16 signaux vidéo de format réduit.

Plus généralement, l'invention concerne un système de création d'un signal de mosaïque à partir d'un ensemble de $2^N$ signaux vidéo codés d'entrée, en effectuant une réduction de format d'un facteur N des signaux codés d'entrée par le procédé décrit ci-dessus. Pour cela, il est nécessaire d'appliquer ledit procédé pour chaque sous-ensemble de $(2^N/N)$ signaux vidéo codés d'entrée.

Dans ce système de création, lors de l'opération de transformation inverse DCT, un changement des coefficients de la matrice de transformation peut avantageusement être effectué dans le but de générer :

- soit un unique signal vidéo de format non-réduit via la matrice $M_{8\times8}$, en appliquant le procédé selon l'invention sur un seul des $2^N/N$ signaux,
- soit 4 signaux vidéo de format réduit d'un facteur 2 via la matrice $M_{2\times4\times4}$, en appliquant le procédé selon l'invention sur 2 ensembles de 2 signaux pris parmi les $2^N/N$ signaux,
- soit 16 signaux vidéo de format réduit d'un facteur 4 via la matrice $M_{4\times4\times4}$, en appliquant le procédé selon l'invention sur 4 ensembles de 4 signaux pris parmi les $2^N/N$ signaux.

De façon avantageuse, le procédé selon l'invention pourra aussi être mis en oeuvre pour la réduction de format d'un facteur N d'un même signal vidéo codé d'entrée en appliquant les opérations de traitement décrites ci-dessus à des blocs DCT de taille 8*8 issus de ce même signal vidéo codé.

Un procédé de traitement selon l'invention peut avantageusement être utilisé dans un système de traitement vidéo pour réduire le format d'un ou plusieurs signaux vidéo codés, ou dans un système de création d'un signal de mosaïque. En particulier, de tels systèmes peuvent être mis en oeuvre et utilisés dans des équipements de fournisseurs de services ou de diffuseurs de programmes TV.

Concernant la mise en oeuvre de l'invention, il sera en particulier fait appel à des programmes d'ordinateur comprenant des instructions de code de programme pour exécuter les différentes étapes du procédé lorsque lesdits programmes sont exécutés sur des processeurs de signal.


**Revendications**

**1.** Procédé de traitement vidéo de N signaux vidéo codés d'entrée, pour décoder et réduire d'un facteur N le format de chacun desdits signaux codés vidéo d'entrée et générer un ensemble de signaux vidéo décodés de format réduit dans le domaine pixel, chaque signal vidéo codé d'entrée comprenant des blocs DCT de taille 8*8 dits « blocs DCT d'entrée », procédé de traitement vidéo **caractérisé en ce qu**'il comprend :

- une étape d'extraction de N blocs de taille réduite (8/N * 8/N), chaque bloc de taille réduite étant extrait d'un bloc DCT d'entrée,
- une première étape de transformation inverse DCT appliquée successivement à des vecteurs d'entrée de taille 8, chaque vecteur d'entrée étant rempli à partir des coefficients des lignes (ou des colonnes) constituant les N blocs de taille réduite, chaque étape de transformation inverse DCT générant un vecteur de sortie de taille 8 définissant les lignes (ou les colonnes) de N blocs intermédiaires de taille réduite, ladite première étape de transformation inverse DCT étant répétée sur toutes les lignes (ou les colonnes) des N blocs de taille réduite,
- une deuxième étape de transformation inverse DCT appliquée successivement à des vecteurs d'entrée de taille 8, chaque vecteur d'entrée étant rempli à partir des coefficients des colonnes (ou des lignes) constituant les N blocs intermédiaires, chaque étape de transformation inverse DCT générant un vecteur de sortie de taille 8 définissant, via une étape de calcul récursif appliquée aux valeurs dudit vecteur de sortie, les colonnes (ou les lignes) de N blocs de sortie de taille réduite, ladite deuxième étape de transformation inverse DCT étant répétée sur toutes les colonnes (ou les lignes) des N blocs intermédiaires,

chacun desdits N blocs de sortie de taille réduite définissant un desdits signaux vidéo décodés de format réduit d'un facteur N.

**2.** Procédé de traitement vidéo selon la revendication 1 **caractérisé en ce que** l'étape d'extraction effectue l'extraction des coefficients DCT de plus basse fréquence dans chaque bloc DCT d'entrée.

**3.** Procédé de traitement vidéo selon la revendication 2 **caractérisé en ce que** la première étape et la deuxième étape de transformation inverse DCT mettent en oeuvre une matrice de transformation de taille 8*8 dont la valeur des coefficients est fonction de la valeur du paramètre N.

**4.** Procédé de traitement vidéo pour décoder et réduire d'un facteur N le format d'un signal vidéo codé d'entrée et générer un signal vidéo décodé de format réduit dans le domaine pixel, ledit signal vidéo codé d'entrée comprenant des blocs DCT de taille 8*8 dits « blocs DCT d'entrée », procédé de traitement vidéo **caractérisé en ce qu**'il comprend :

- une étape d'extraction de N blocs de taille réduite (8/N * 8/N), chaque bloc de taille réduite étant extrait d'un bloc DCT d'entrée,
- une première étape de transformation inverse DCT appliquée successivement à des vecteurs d'entrée de taille 8, chaque vecteur d'entrée étant rempli à partir des coefficients des lignes (ou des colonnes) constituant les N blocs de taille réduite, chaque étape de transformation inverse DCT générant un vecteur de sortie de taille 8 définissant les lignes (ou les colonnes) de N blocs intermédiaires de taille réduite, ladite première étape de transformation inverse DCT étant répétée sur toutes les lignes (ou les colonnes) des N blocs de taille réduite,
- une deuxième étape de transformation inverse DCT appliquée successivement à des vecteurs d'entrée de taille 8, chaque vecteur d'entrée étant rempli à partir des coefficients des colonnes (ou des lignes) constituant les N blocs intermédiaires, chaque étape de transformation inverse DCT générant un vecteur de sortie de taille 8 définissant, via une étape de calcul récursif appliquée aux valeurs dudit vecteur de sortie, les colonnes (ou les lignes) de N blocs de sortie de taille réduite, ladite deuxième étape de transformation inverse DCT étant répétée sur toutes les colonnes (ou les lignes) des N blocs intermédiaires,

lesdits blocs de sortie de taille réduite définissant ledit signal vidéo décodé de format réduit d'un facteur N.

**5.** Procédé de création d'une mosaïque de programmes à partir d'un ensemble de $2^N$ signaux vidéo codés d'entrée comprenant des blocs DCT de taille 8*8 dits « blocs DCT d'entrée », ladite mosaïque consistant en une juxtaposition de programmes vidéo décodés de format réduit d'un facteur N obtenus à partir desdits signaux vidéo codés d'entrée, procédé de création **caractérisé en ce qu**'il comprend, pour chaque sous-ensemble de $(2^N/N)$ signaux vidéo codés d'entrée :

- une étape d'extraction de N blocs de taille réduite 8/N * 8/N, chaque bloc de taille réduite étant extrait d'un bloc DCT d'entrée appartenant au sous-ensemble considéré,
- une première étape de transformation inverse DCT appliquée successivement à des vecteurs d'entrée de taille 8, chaque vecteur d'entrée étant rempli à partir des coefficients des lignes (ou des colonnes) constituant les N blocs de taille réduite, chaque étape de transformation inverse DCT générant un vecteur de sortie de taille 8 définissant les lignes (ou les colonnes) de N blocs intermédiaires de taille réduite, ladite première étape de transformation inverse DCT étant répétée sur toutes les lignes (ou les colonnes) des N blocs de taille réduite,
- une deuxième étape de transformation inverse DCT appliquée successivement à des vecteurs d'entrée de taille 8, chaque vecteur d'entrée étant rempli à partir des coefficients des colonnes (ou des lignes) constituant les N blocs intermédiaires, chaque étape de transformation inverse DCT générant un vecteur de sortie de taille 8 définissant, via une étape de calcul récursif appliquée aux valeurs dudit vecteur de sortie, les colonnes (ou les lignes) de N blocs de sortie de taille réduite, ladite deuxième étape de transformation inverse DCT étant répétée sur toutes les colonnes (ou les lignes) des N blocs intermédiaires,
  dans chaque sous-ensemble, chacun desdits N blocs de sortie de taille réduite définissant un desdits signaux vidéo décodés de format réduit d'un facteur N.

**6.** Procédé de création d'une mosaïque de programmes selon la revendication 5 **caractérisé en ce que** l'étape d'extraction effectue l'extraction des coefficients DCT de plus basse fréquence dans chaque bloc DCT d'entrée.

**7.** Procédé de création d'une mosaïque de programmes selon la revendication 6 **caractérisé en ce que** la première étape et la deuxième étape de transformation inverse DCT mettent en oeuvre une matrice de transformation de taille 8*8 dont la valeur des coefficients est fonction de la valeur du paramètre N.

**8.** Système de traitement vidéo de N signaux vidéo codés d'entrée, système de traitement vidéo **caractérisé en ce qu'**il met en oeuvre un procédé selon la revendication 1.

**9.** Système de traitement vidéo d'un signal vidéo codé d'entrée, système de traitement vidéo **caractérisé en ce qu'**il met en oeuvre un procédé selon la revendication 4.

**10.** Système de création d'une mosaïque de programmes à partir d'un ensemble de $2^N$ signaux vidéo codés d'entrée, système de création **caractérisé en ce qu'**il met en oeuvre un procédé selon la revendication 5.

**11.** Programme d'ordinateur comprenant des instructions de code de programme pour exécuter les différentes étapes du procédé selon la revendication 1 ou 4 lorsque ledit programme est exécuté sur un processeur de signal dans un système de traitement vidéo

**12.** Programme d'ordinateur comprenant des instructions de code de programme pour exécuter les différentes étapes du procédé selon la revendication 5 lorsque ledit programme est exécuté sur un processeur de signal dans un système de création d'une mosaïque de programmes.

**FIG.1**

EP 1 246 469 A2

**FIG.2**